# EUROPEAN PATENT APPLICATION

(11) **EP 0 709 155 A1**
(43) Date of publication of application: **01.05.1996**
(21) Application number: 95630102.2
(22) Date of filing: 14.09.1995
(51) Int. Cl.: B23D 45/04

(54) **Miter saw with switched reluctance motor**

(30) Priority: 31.10.1994 US 332361
(71) Applicant: EMERSON ELECTRIC CO., St. Louis Missouri 63136 (US)
(72) Inventor: Beth, David Earl, St. Charles, Missouri 63303 (US); Metzger, James Irvin, Jr., Ballwin, Missouri 63021 (US)
(74) Representative: Weydert, Robert

(57) **Abstract**

The miter saw (1) includes a supporting frame (3) with a turntable (7) horizontally rotatably mounted on the supporting frame (3) for selective miter adjustment. A rotatably mounted saw blade (15) is pivotally mounted on the turntable (7) for movement between an upper at rest and a lower operational position. A switched reluctance motor (35) is connected to the saw blade (15) for rotatable powered operation about its rotatable mounting. Motor drive electronic means are utilized for controlling the operation of the switched reluctance motor (35).

## Description

### Background of the Invention

The present invention relates to a miter saw with switched reluctance motor, and more particularly, to a compound miter saw with a switched reluctance motor having a variable speed and automatic braking for operating a rotatably mounted saw blade.

Most prior art miter saws use universal motors and gear or belt reduction drives to power a rotatably mounted saw blade. For turning the universal motor on and off in a convenient manner, a trigger switch is utilized. Some recent models of prior art miter saws also employ a brake to shorten the coast down-time of the rotatably mounted saw blade. This is accomplished by reconnecting the universal motor into a short circuited generator when the trigger switch is released. This is sometimes referred to as "regenerative" braking or "dynamic" braking. A separate circuit operated by a second contact of the trigger switch engages and disengages the brake. Unfortunately, the optimum brush timing or "brush lead" is different for a motor and a generator. Thus, braking a motor in the manner described above increases wear and tear on the motor brushes and commutator. As the brushes and commutator wear, there is a tendency for the brake to be less reliable and it may occasionally "skip". Even when brake reliability is affected, the motor may continue to function satisfactorily for some period of time.

Switched reluctance motors rely upon semi-conductor switches and complex logic for operation. Such motors are also capable of braking, again relying upon those same semi-conductor switches and logic. Thus, it is likely that any failure which affects braking would also prevent the motor from running, thus preventing use of the saw with a failed brake. In addition, switched reluctance motors can be controlled to provide braking down to near zero speed, thus reducing the total stopping time. The braking action of a universal motor, on the other hand, decreases sharply as the motor slows down, and this prolongs the total stopping time.

As will be seen in the discussion that follows, the present invention employs a switched reluctance motor which eliminates the aforementioned problems associated with universal motors, particularly those that employ "regenerative" or "dynamic" braking.

### Summary of the Invention

Among the several objects and advantages of the present invention include:
the provision of a miter saw having a switched reluctance motor that provides braking and variable speed features;
the provision of the aforementioned miter saw with switched reluctance motor that may be connected to a gear reduction device for driving a rotatably mounted saw blade or may be directly connected to the rotatably mounted saw blade itself;
the provision of the aforementioned miter saw with a direct drive switched reluctance motor that has a slender elongated construction to prevent any interference between the motor and a workpiece being cut by the rotatably mounted saw blade;
the provision of the aforementioned miter saw with switched reluctance motor that includes a trigger switch having a first contact for activating the motor electronic control drive for operating the switched reluctance motor and a second contact for activating the motor electronic control drive for braking the switched reluctance motor;
the provision of the aforementioned miter saw with switched reluctance motor that is reliable, durable, easy to operate and is otherwise well adapted for the purposes intended.

Briefly stated, the miter saw of the present invention includes a supporting frame with a turntable rotatably mounted on the supporting frame for selective miter adjustment. A rotatably mounted saw blade is pivotally mounted on the turntable for movement between an upper at rest position and a lower operational position. A switched reluctance motor is connected to the saw blade for rotatable powered operation thereof about its rotatable mounting. Motor drive electronic means are provided for controlling the operation of the switched reluctance motor.

The switched reluctance motor may be laterally offset from the rotatable mounting of the saw blade for connection to a reduction device that drives the saw blade. Alternatively, the switched reluctance motor may be directly connected to the saw blade in line with its rotatable mounting. If directly connected to the saw blade, the switched reluctance motor is preferably constructed as a slender elongated motor in order tc prevent any interference in the operation of the rotatably mounted saw blade.

A trigger switch operates to turn the switched reluctance motor on and off. The trigger switch includes a first contact for turning the motor on and off and a second contact to activate the braking means. The motor drive electronic means includes means for automatically braking the saw blade when activated by the second contact of the trigger switch. The motor drive electronic means also includes means providing a slow start for the switched reluctance motor. The motor drive electronic means are preferably enclosed within the motor housing.

By its very nature, the switched reluctance motor includes a variable speed control for variable speed operation of the rotatably mounted saw blade.

These and other objects and advantages of the present invention will become apparent from the description that follows.

### Brief Description of the Drawings

Figure 1 is a front perspective view of a compound miter saw in which a switched reluctance motor is incorporated as taught by the present invention;
Figure 2 is a rear perspective view of the compound miter saw with switched reluctance motor, partially in section;
Figure 3 is a side elevational view of the compound miter saw with switched reluctance motor; and
Figure 4 is a fragmentary view of a control circuit for operating the switched reluctance motor that drives the rotatably mounted saw blade.

Corresponding reference numerals will be used throughout the several figures of the drawings.

### Description of the Preferred Embodiments

The following detailed description illustrates the invention by way of example and not by way of limitation. The description will clearly enable one skilled in the art to make and use the invention, and describe several embodiments, adaptions, variations, alternatives and uses of the invention, including what we presently believe is the best mode of carrying out the invention.

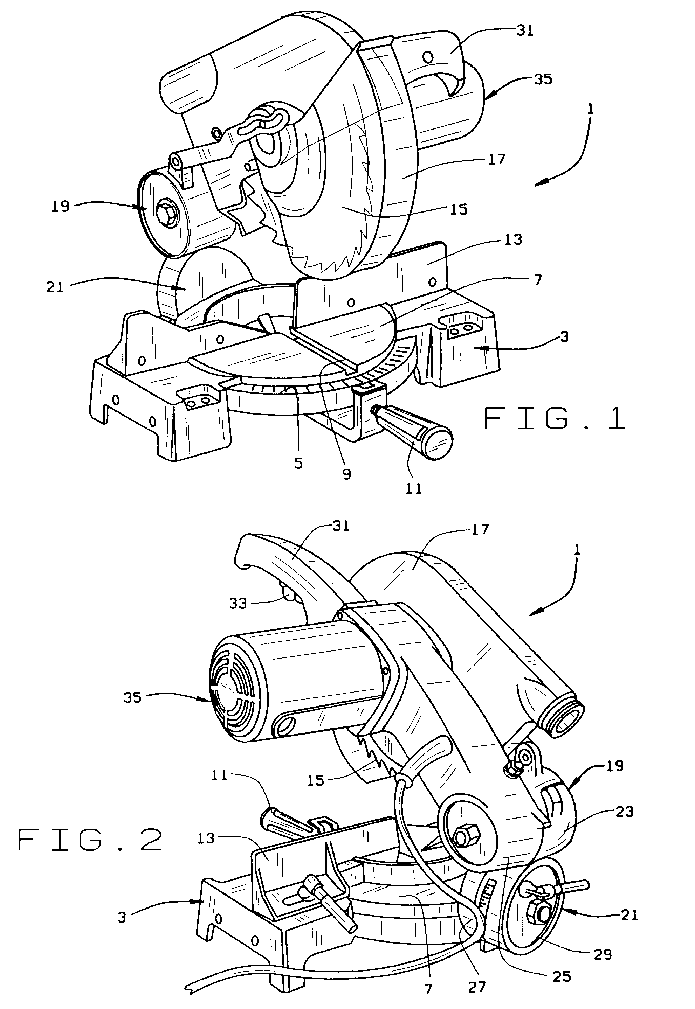

In order to understand the specific improvement of a switched reluctance motor in a miter saw, a description of the principal components of the miter saw and the manner in which they cooperate together will first be discussed. As illustrated in Figures 1-3 of the drawings, the compound miter saw 1 includes a supporting base or frame 3 having an arcuate miter scale 5 attached at an upper front position for ease of use and visibility by the user. A turntable 7 is selectively rotatably mounted within the supporting frame or base 3 and is provided with a saw blade slot 9, as best seen in Figure 1. A miter lock handle 11 is constructed to selectively rotate the turntable 7 relative to the supporting frame 3 in order to position the turntable 7 in the desired miter setting, as shown on the miter scale 5. A workpiece supporting fence 13 holds and supports workpieces in accurate aligned and squared position in the compound miter saw 1. The work supporting fence 13 is mounted to the frame 3 and extends across the turntable 7, as illustrated.

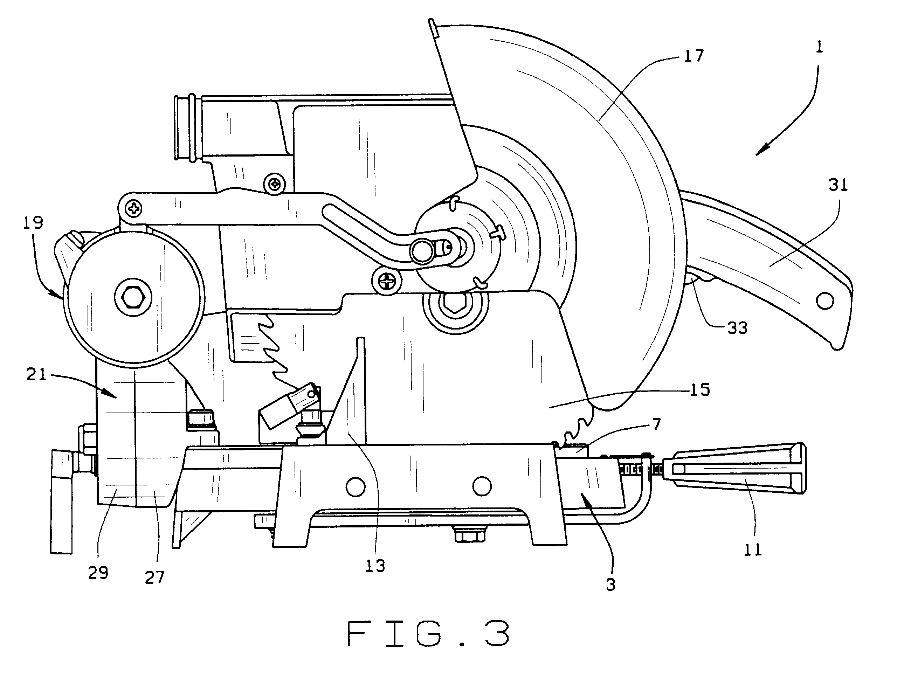

A miter saw blade 15 is rotatably mounted within an upper blade guard and housing 17. The rotatably mounted saw blade 15 is pivotally mounted on the turntable 7 for movement between an upper at rest position and a lower operational position. For this purpose, first and second circumferentially extending and enclosed cylinders 19, 21 are provided. The enclosed cylinders 19,21 are vertically juxtaposed and extend transversely relative to one another to provide transversely extending axes. The first enclosed chamber 19 is provided with laterally extending fixed and movable cylinder sections 23, 25 for pivotal movement of the rotatably mounted saw blade 15 between operational and at rest positions. The second cylinder 21 is located immediately below the first cylinder 19 and also includes laterally extending fixed and movab!e cylinder sections 25, 27, as best seen in Figure 3, for the bevel pivotal adjustment of the rotatably mounted saw blade 15 relative to the turntable 7. For further specific descriptions of the first and second circumferentially extending and enclosed cylinders 19, 21, reference is made to U.S. Patent No. 5,042,348 which specifically describes such features.

For raising and lowering the rotatably mounted saw blade 15, a miter saw handle 31 is provided. The miter saw handle 31 includes an associated trigger switch 33 that operates the motor 35. As discussed above, the motor 35 has typically been a universal motor that is connected to a belt or gear reduction drive for driving the rotatably mounted saw blade 15. The present invention employs a switched reluctance motor as the motor 35 in the miter saw 1.

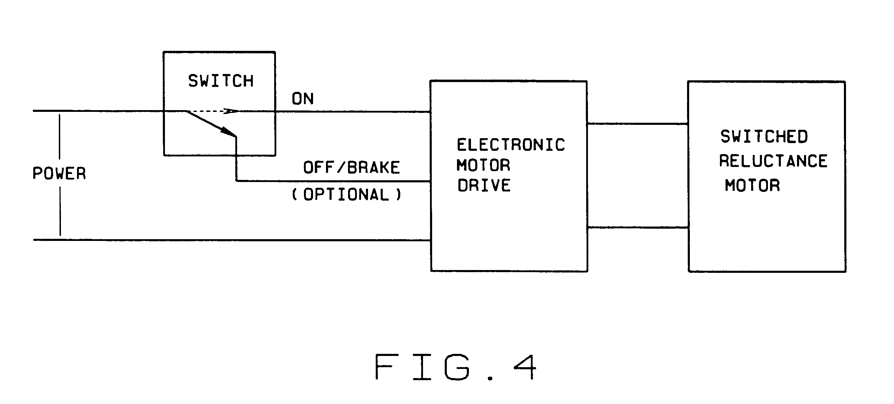

As shown in Figure 4 of the drawing, a schematic control circuit is illustrated showing the switched reluctance motor 35 electrically connected to the electronic motor drive 37 and operated by the trigger switch 33 in the miter saw handle 31. As in prior art miter saws, the trigger switch 33 may include first and second contacts. Thus, upon depression of the trigger switch 33, the switched reluctance motor 35 is energized to drive the rotatably mounted saw blade 15. Upon release of the trigger switch 33, the second contact can be electrically connected to the electronic motor drive 37 to brake the switched reluctance motor 35. This would be similar to the present practice. Alternatively, the electronic motor drive 37 could be configured to sense that the trigger switch 33 is opened, i.e., released, and then automatically brake the switched reluctance motor 35. Thus, the electronic motor drive 37 can be configured in any desired manner to work on conjunction with the trigger switch 33 to brake the switched reluctance motor 35.

Other variations are possible including the addition of a variable speed control to the switch reluctance motor 35. Another variation can include a soft start, i.e., relatively slow ramp up of motor speed, in the electronic motor drive 37 in order to reduce the strain on a gear reduction drive as well as reduce the starting inrush current to the switched reluctance motor 35. This is an advantage when long extension cords are utilized.

If the switched reluctance motor 35 is used in conjunction with a gear or belt reduction drive, the switched reluctance motor would be laterally offset from the rotatable mounting of the rotatably mounted saw blade 15, in order to avoid any interference between the motor and a workpiece being cut by the rotatably mounted saw blade. Alternatively, if a switched reluctance motor 35 is directly connected to the rotatably mounted saw blade 15, an elongated slender motor may be required in order to avoid any interference with a workpiece being cut by the rotatably mounted saw blade 15.

From the foregoing, it will now be appreciated that the miter saw with switched reluctance motor eliminates the wear and tear on brushes and commutators as in prior art universal motors as well as eliminates "regenerative" or "dynamic" braking associated with a universal motor. Wear and tear is substantially eliminated because switched reluctance motors rely upon semi-conductor switches and complex logic to operate. Because switched reluctance motors are capable of braking, as a result of the semi-conductor switches and logic, they can be controlled to provide braking down to near zero speed, thus reducing the total stopping time.

In view of the above, it will be seen that the several objects and features of this invention are achieved and other advantageous results obtained.

As various changes could be made in the above construction without departing from the scope of the invention, it is intended that all matter contained in the above description or shown in the accompanying drawings shall be interpreted as illustrated and not in a limiting sense.

## Claims

1. A miter saw comprising:
a supporting frame;
a turntable rotatably mounted on said supporting frame for selective miter adjustment;
a rotatably mounted saw blade that is also pivotally mounted on the turntable for movement between an upper at rest position and a lower operational position;
a switched reluctance motor connected to said saw blade for rotatable powered operation thereof about its rotatable mounting; and
motor drive electronic means for controlling the operation of the switched reluctance motor.

2. The miter saw as defined in Claim 1 wherein the switched reluctance motor is laterally offset from the rotatable mounting of the saw blade and is connected to a reduction device which drives the saw blade.

3. The miter saw as defined in Claim 1 wherein the switched reluctance motor is directly connected to the saw blade in line with its rotatable mounting.

4. The miter saw as defined in Claim 3 wherein the switched reluctance motor is constructed as a slender elongated motor.

5. The miter saw as defined in Claim 1 and including a trigger switch to turn the variable reluctance motor on and off, said trigger switch including a first contact for turning the motor on and off and a second contact to activate the motor drive electronic braking means.

6. The miter saw as defined in Claim 5 wherein the motor drive electronic means includes means for automatically braking the saw blade when the trigger switch is released.

7. The miter saw as defined in Claim 6 including a variable speed control for the switched reluctance motor.

8. The miter saw as defined in Claim 1 wherein the motor drive electronic means includes means providing a slow start for the switched reluctance motor.
